# EUROPÄISCHE PATENTANMELDUNG

(11) **EP 2 106 728 A1**
(43) Veröffentlichungstag der Anmeldung: **07.10.2009**
(21) Anmeldenummer: 09002013.2
(22) Anmeldetag: 13.02.2009
(51) Int. Cl.: A47J 31/60

(54) **Getränkemaschine mit einem Wassertank und einer Wasserfilterkartusche**

(30) Priorität: 25.02.2008 DE 102008010914
(71) Anmelder: Braun GmbH, 61476 Kronberg (DE)
(72) Erfinder: Eisenkolb, Erik, 60385 Frankfurt am Main (DE)

(57) **Zusammenfassung**

Die erfindungsgemäße Getränkemaschine umfasst einen Wassertank mit einem Tankstutzen (4) und eine Wasserfilterkartusche (1), wobei im Tankstutzen (4) des Wassertanks ein Absatz (16) und ein Anschlag für die Wasserfilterkartusche vorgesehen sind. Die Wasserfilterkartusche (1) weist einen Einlass (14) und im unteren Bereich einen Auslass (15) auf, wobei der Auslass (15) mit dem Tankstutzen (4) verbindbar ist.

## Beschreibung

### Technisches Gebiet

Die Erfindung betrifft eine Getränkemaschine mit einem Wassertank und einer Wasserfilterkartusche. Die Getränkemaschine kann beispielsweise eine Kaffeemaschine sein.

Wasserfilterkartuschen werden in Wassertanks von Getränkemaschinen eingebaut, um das im Wassertank befindliche Wasser aufzubereiten. Im Inneren der Wasserfilterkartusche befindet sich ein Filtergranulat, das das durch die Wasserfilterkartusche geleitete Wasser demineralisiert und entkarboniert. Zudem können damit feine Partikel herausgefiltert werden. Um das Wasser durch die Filterkartusche zu saugen, verfügt die Getränkemaschine vorzugsweise über eine Saugpumpe.

### Stand der Technik

Aus der Druckschrift DE 10 2004 039 790 A1 ist ein Wasservorratsbehälter mit einer Filterpatrone bekannt. Die Filterpatrone umfasst ein Filtergehäuse, in dem ein Filtermaterial zwischen einem Zulauf und einem Ablauf angeordnet ist. Die Filterpatrone ist im Wesentlichen formschlüssig im Bodenbereich des Wasservorratsbehälters angeordnet. Die Oberseite der Filterpatrone bildet gewissermaßen den Boden des Wasservorratsbehälters. Ein Dichtelement ist um die Filterpatrone umlaufend angeordnet und soll verhindern, dass Wasser durch einen Spalt zwischen der Filterpatrone und der Wand des Wasservorratsbehälters hindurch tritt. Diese Lösung hat jedoch den Nachteil, dass sie eine lange und große Dichtfläche aufweist, welche leckageanfällig ist.

Aus der Druckschrift DE 10 2006 027 267 A1 ist ein Wassertank mit einer Wasserfilterpatrone bekannt. Am Boden des Wassertanks sind zwei Seitenstege, welche für die Filterpatrone als Halterungs und Führungselemente dienen, angeformt. Die Seitenstege sind kreissegmentartig ausgeformt und umgreifen die Filterpatrone.

### Darstellung der Erfindung

Eine Aufgabe der Erfindung ist es, eine Getränkemaschine mit einem Wassertank und einer Wasserfilterkartusche anzugeben, bei der sichergestellt ist, dass sich die Wasserfilterkartusche ohne weiteres in den Wassertank einsetzen und mit dem Tankstutzen des Wassertanks verbinden und auch wieder trennen lässt. Dies soll in zuverlässiger Weise auch durch einen ungeübten Benutzer und auch bei einer engen Wassertankgeometrie möglich sein.

Vorteilhafter Weise ist der Wassertank für die Aufnahme der Wasserfilterkartusche ausgebildet, und kann aber im Bedarfsfall trotzdem weitgehend entleert werden.

Die Aufgabe wird durch eine Getränkemaschine mit einem Wassertank und einer Wasserfilterkartusche mit den Merkmalen des Anspruchs 1 gelöst.

Die erfindungsgemäße Getränkemaschine umfasst einen Wassertank mit einem Tankstutzen und eine Wasserfilterkartusche, wobei im Tankstutzen des Wassertanks ein Absatz und ein Anschlag für die Wasserfilterkartusche vorgesehen sind. Der Absatz ist oberhalb (das heißt in Einführrichtung der Kartusche vor) dem Anschlag. Die Wasserfilterkartusche weist einen Einlass und im unteren Bereich einen Auslass auf, wobei der Auslass mit dem Tankstutzen verbindbar ist.

Vorteilhafte Weiterbildungen der Erfindung ergeben sich aus den in den abhängigen Ansprüchen angegebenen Merkmalen.

Bei einer Ausführungsform der erfindungsgemäßen Getränkemaschine ist vorgesehen, dass wenigstens ein Schlitz vorgesehen sind, und der Schlitz oberhalb des Absatzes endet.

Bei einer Ausführungsform der erfindungsgemäßen Getränkemaschine ist vorgesehen, dass der Auslass kreisförmig ausgebildet ist.

Bei einer weiteren Ausführungsform der erfindungsgemäßen Getränkemaschine ist vorgesehen, dass der Auslass rohrförmig ausgebildet ist.

Zudem ist es von Vorteil, wenn der Absatz im Tankstutzen konisch ausgebildet ist. Dadurch werden scharfe Kanten vermieden und der Auslass der Wasserfilterkartusche lässt sich besser in den Tankstutzen einführen.

Vorzugsweise ist der Durchmesser oberhalb des Absatzes größer als Durchmesser unterhalb des Absatzes.

Darüber hinaus kann der Tankstutzen des Wassertank einen weiteren Schlitz aufweisen. Dadurch wird erreicht, dass der Wassertank noch besser und schneller entleert werden kann. Dies ist insbesondere beim Entkalken der Getränkemaschine von Vorteil.

Zudem kann vorgesehen sein, dass der weitere Schlitz oberhalb des Absatzes endet.
Bei einer Weiterbildung der erfindungsgemäßen Getränkemaschine ist vorgesehen, dass der Tankstutzen mit dem Boden des Wassertanks verschweißt oder verklebt ist.

Zudem kann bei der erfindungsgemäßen Getränkemaschine vorgesehen sein, dass am Auslass der Wasserfilterkartusche eine Dichtung vorgesehen ist.

Die Dichtung kann als Radialdichtung ausgebildet sein.

Bei der erfindungsgemäßen Getränkemaschine ist die Dichtung vorteilhafterweise so am Auslass angeordnet, dass sie sich, wenn die Wasserfilterkartusche im Wassertank montiert ist, unterhalb des Absatzes befindet.

Schließlich kann bei der erfindungsgemäßen Getränkemaschine die Wasserfilterkartusche einen ersten vertikalen Kanal aufweisen, in dem das Wasser aufsteigt, und einen zweiten vertikalen Kanal aufweisen, in dem das Wasser nach unten strömt. Diese Bauform ist insbesondere für einen schmalen und hohen Wassertank geeignet.

### Kurze Beschreibung der Zeichnungen

Im Folgenden wird die Erfindung mit mehreren Ausführungsbeispielen anhand von sieben Figuren weiter erläutert.
- Figur 1a: zeigt eine Ausführungsform der Wasserfilterkartusche in der Seitenansicht.
- Figur 1b: zeigt die Wasserfilterkartusche im eingebauten Zustand in der Ansicht von vorn.
- Figur 1c: zeigt die Wasserfilterkartusche im eingebauten Zustand in der Seitenansicht teilweise im Schnitt.
- Figur 2: zeigt den unteren Bereich der Wasserfilterkartusche im eingebauten Zustand im Schnitt.
- Figur 3: zeigt eine mögliche Ausführungsform des Tankstutzens in der Seitenansicht.
- Figur 4: zeigt den Tankstutzen in der Ansicht von oben.
- Figur 5: zeigt den Tankstutzen in der Ansicht von unten.
- Figur 6: zeigt den Tankstutzen in der Seitenansicht im Schnitt.
- Figur 7: zeigt eine dreidimensionale Ansicht des Tankstutzens.

### Wege zur Ausführung der Erfindung

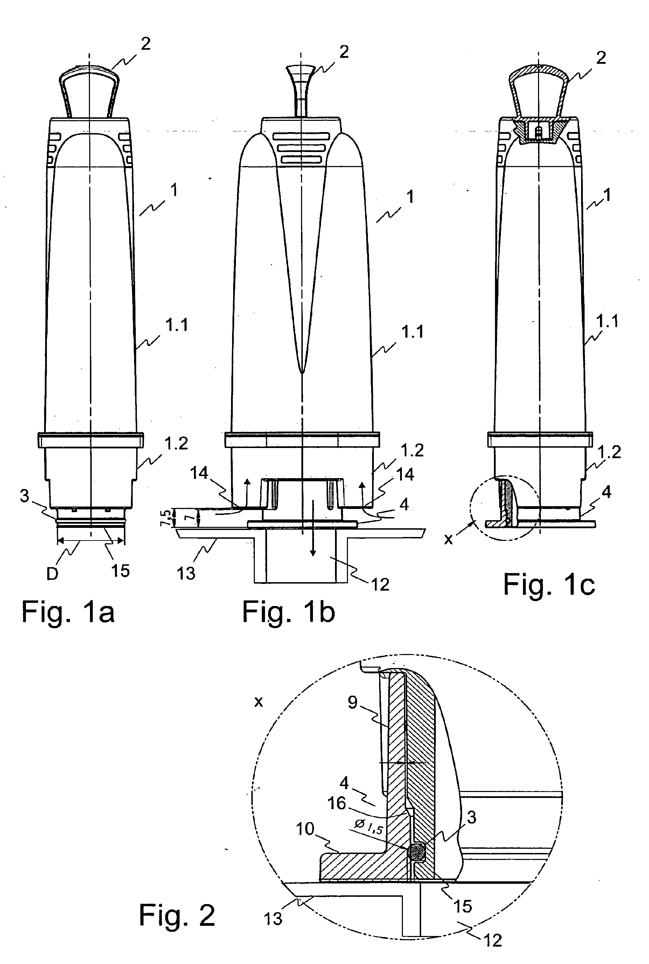

In Figur 1a ist eine Ausführungsform einer Wasserfilterkartusche 1 in der Seitenansicht dargestellt, die für die erfindungsgemäße Getränkemaschine geeignet ist. Figur 1b zeigt die Wasserfilterkartusche 1 im eingebauten Zustand in der Ansicht von vorn. Die Wasserfilterkartusche 1 umfasst einen oberen Gehäuseteil 1.1 und einen unteren Gehäuseteil 1.2, die miteinander verbunden, z.B. verklebt oder verschweißt, sind. Oben an der Wasserfilterkartusche 1 ist ein Griff 2 vorgesehen, um die Wasserfilterkartusche 1 sicher halten zu können. Dieser ist insbesondere beim Einsetzen und beim Herausnehmen der Wasserfilterkartusche 1 hilfreich.

In der Wasserfilterkartusche 1 befindet sich Filtermaterial, um Wasser zu filtern. Im unteren Bereich der Wasserfilterkartusche 1 sind ein oder mehrere Einlässe 14 zum Ansaugen von Wasser aus dem Wassertank vorgesehen. Zudem befindet sich im unteren Bereich der Wasserfilterkartusche 1 ein Auslass 15, durch den das gefilterte Wasser aus der Wasserfilterkartusche 1 austritt. Die Pfeile in Figur 1b zeigen wo das Wasser in die Wasserfilterkartusche 1 einströmt und wo das Wasser aus der Wasserfilterkartusche 1 austritt.

Der Auslass 15 der Wasserfilterkartusche 1 ist auf einen Tankstutzen 4 gesteckt. Der Tankstutzen 4 ist auf der Innenseite des Wassertanks mit dessen Boden 13 zum Beispiel durch Kleben oder Schweißen fest verbunden. Auf der dazu gegenüberliegenden Unterseite des Wassertanks befindet sich ein Tankauslass 12. In der Regel ist in den Tankauslass 12 ein Ventil eingebaut, das den Tankauslass 12 verschließt, wenn der Wassertank nicht mit der Getränkemaschine verbunden ist. Das Ventil ist in den Figuren allerdings nicht gezeigt. An den Tankauslass 12 schließt sich eine nicht gezeigte Leitung an, um das gefilterte Wasser abzuleiten. Um das Wasser durch den Tankauslass 12 aus dem Wassertank abzusaugen, kann eine Saugpumpe vorgesehen sein.

In Figur 1c ist die Wasserfilterkartusche 1 zusammen mit dem Tankstutzen 4 in der Seitenansicht teilweise im Schnitt dargestellt.

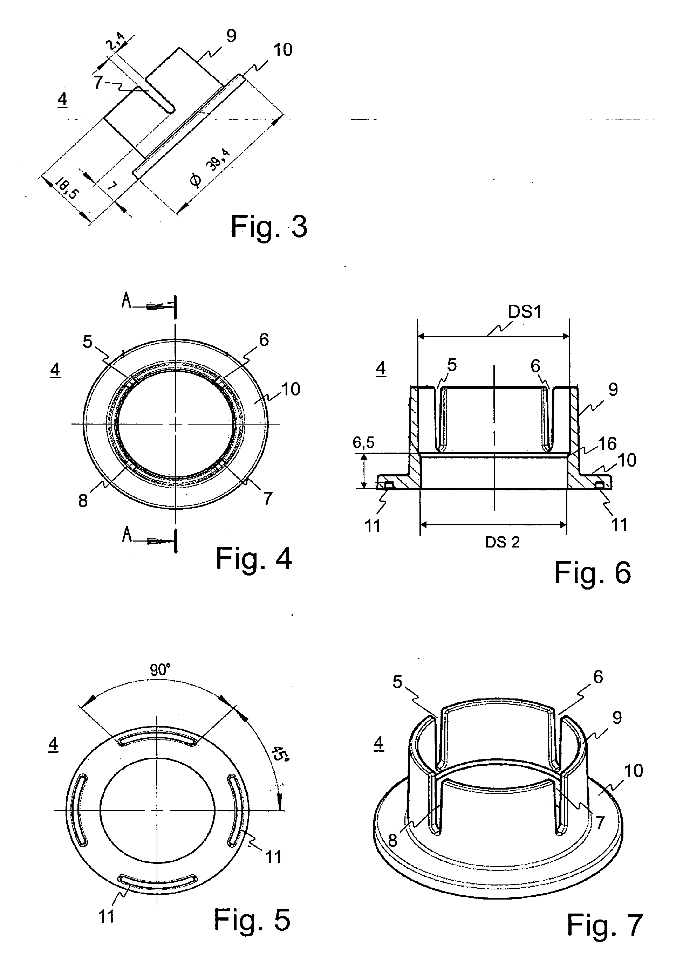

Figur 2 zeigt den unteren Bereich der Wasserfilterkartusche 1 im eingebauten Zustand im Schnitt in einer vergrößerten Darstellung. Um den Auslass 15 der Wasserfilterkartusche 1 gegenüber dem Wassertank abzudichten, ist zwischen dem Tankstutzen 4 und dem Auslass 15 eine Radialdichtung 3 in Form eines O-Rings angeordnet. Die Dichtung 3 hat bei der in Figur 2 gezeigten Ausführungsform einen Durchmesser von 1,5 mm. Da der Tankstutzen 4 vier vertikal verlaufende Schlitze 5, 6, 7 und 8 aufweist (siehe Figuren 3 bis 7), ist die Dichtung 3 so am Auslass 15 angeordnet, dass sie sich unterhalb der Schlitze 5 bis 8 befindet, wenn die Wasserfilterkartusche 1 in den Tankstutzen 4 eingesetzt ist. Dadurch wird sichergestellt, dass das Wasser, das durch die Schlitze 5 bis 8 dringt, nicht in den Tankauslass 12 gelangt. Die Dichtung 3 kann auch als Axialdichtung oder als Kombination zwischen Axial und Radialdichtung ausgebildet sein. Sie kann statt als separates Bauteil auch an den Auslass 15 angeformt sein.

Die Oberseite des Tankstutzens 4 dient in diesem Ausführungsbeispiel als Anschlag für die Wasserfilterkartusche 1. Ein Anschlag kann auch in anderer Form angeboten werden, z.B. als Überstand oder Stufe. Figur 3 zeigt eine mögliche Ausführungsform des Tankstutzens 4 in der Seitenansicht. In Figur 4 ist der Tankstutzen 4 in der Ansicht von oben und in Figur 5 in der Ansicht von unten gezeigt. Figur 6 zeigt den Tankstutzen 4 in der Seitenansicht im Schnitt. Figur 7 schließlich zeigt eine dreidimensionale Ansicht des Tankstutzens 4.

Die vertikalen Schlitze 5 bis 8 sind im Kragen 9 des Tankstutzens 4 angeordnet, haben in einer Ausführungsform eine Breite von 2,4 mm und enden 7 mm über der Unterkannte des Flanschs 10 und damit auch 7 mm über dem Tankboden 13. Der Kragen 9 hat einen Innendurchmesser DS1. Die Gesamthöhe des Tankstutzens beträgt 18,5 mm.

Der Innendurchmesser DS1 am Kragen 9 ist größer als der Innendurchmesser DS2 am Flansch 10. Der Übergang vom Innendurchmesser DS1 am Kragen 9 auf den Innendurchmesser DS2 am Flansch 10 erfolgt am Absatz 16. Der Absatz 16 wird im Folgenden auch als Verjüngung bezeichnet. In der Ausführungsform gemäß Figur 6 ist der Absatz 16 konisch ausgebildet. In Strömungsrichtung betrachtet nimmt der Innendurchmesser DS1 am Absatz 16 kontinuierlich ab und erreicht am Ende des Absatzes den Innendurchmesser DS2 des Flansches 10. Der Absatz 16 kann aber auch stufenförmig ausgebildet sein. Die Stufe, die den Absatz bildet, kann auch verrundete Kanten haben, oder der Absatz kann durch zwei ineinanderlaufende Kreisbögen gebildet werden. Der am Kragen 9 größere Innendurchmesser DS1 erleichtert das Einführen der Wasserfilterkartusche 1 in den Tankstutzen 4. Der kleinere Innendurchmesser DS2 am Flansch 10 führt dazu, dass die Dichtung 3 stärker an die Innenwand des Tankstutzens 4 gedrückt wird und somit ausreichend gut dichtet. Der Absatz 16 bildet einen Druckpunkt, den der Benutzer spürt, wenn er die Wasserfilterkartusche in den Wassertank einsetzt. Nachdem die Dichtung 3 den Absatz 16 passiert hat, hat der Benutzer den Eindruck, dass die Wasserfilterkartusche in der Endstellung eingerastet ist und sich nun in der richtigen Position befindet.

Wenn mindestens ein Schlitz vorgesehen ist, kann dieser oberhalb des Absatzes beginnen, so dass der Absatz selbst ohne Schlitz ist. Ein Schlitz, der sich ganz oder teilweise, über den Absatz erstreckt wäre auch denkbar.

Die Innendurchmesser DS1 und DS2 des Tankstutzens 4 sind auf den Durchmesser D des Auslasses 15 der Wasserfilterkartusche 1 abgestimmt.

Auf dem Boden 13 des Wassertanks und korrespondierend an der Untersetie des Flansches können Befestigungshilfen vorgesehen sein, zum Beispiel drei oder vier Erhöhungen und auf der Unterseite des Flanschs 10 drei oder vier Nuten 11. Um den Tankstutzen 4 am Tankboden 13 richtig zu positionieren, werden die Nuten 11 auf die Erhöhungen gesetzt. Auf diese Weise entsteht ein Formschluss zwischen den Erhöhungen am Boden 13 des Wassertanks und dem Tankstutzen 4.

Aus dieser Beschreibung ergibt sich auch, dass die Erfindung auch folgende Gegenstände betrifft:

Einen Tankstutzen zur Aufnahme eines Wasserfilters, welcher eine Innenwandung und eine Außenwandung umfaßt, innerhalb dessen Innenwandung sich ein Wasserfilter einsetzen läßt, wobei der Wasserfilter in einer Zuführrichtung von einer ersten in eine zweite und darauf in eine dritte Position bewegt wird und wobei sich in der ersten Position zwischem dem Wasserfilter und der Innenwandung des Tankstutzens Reibungskräfte von einer ersten Größe ergeben und sich in der zweiten Position zwischem dem Wasserfilter und der Innenwandung des Tankstutzens Reibungskräfte von einer zweiten Größe ergeben und die dritten Position zum Betrieb des Wasserfilters geeignet ist, und wobei ferner die Reibungskräfte der zweiten Größe um mindestens 50% größer sind als die Reibungskräfte der ersten Größe und die zweite Position einen Abstand zur dritten Position hat, der nicht größer ist als 5% der Länge des Wasserfilters.

Bei einem solchen Tankstutzen wird dem Benutzer in der zweiten Position ein Reibungswiderstand vermittelt, der das baldige Erreichen der dritten Position, welche in der Regel die Arbeitsposition des Wasserfilters ist, anzeigt. In der dritten Position kann der Wasserfilter formschlüssig gegen einen Anschlag geführt sein.

In Betracht kommt ein Tankstutzen zur Aufnahme eines Wasserfilters mit radialer Dichtung, insbesondere einer O-ringförmigen Dichtung, die in einer Nut sitzen kann.

Ein solcher Tankstutzen kann einen Absatz an der Innenwandung haben, der die Veränderung der Reibungskräfte bewirkt. Die Reibungskräfte der zweiten Größe können dabei um mindestens 25%, 50%, 75%, 100% oder 200% größer sind als die Reibungskräfte der ersten Größe.

Der Abstand der zweiten Position zur dritten Position ist dabei nicht größer als 1%, 2%, 3% oder 5% der Länge des Wasserfilters. Der Abstand kann 6 mm, 5 mm, 4 mm, 3 mm oder jeweils weniger betragen und wird in der Regel nicht mehr als 10 mm oder 20 mm betragen.

Das Vorsehen von Schitzen an einem solchen Tankstutzen kann die Flexibilität des Stutzens beim Aussetzen eines Filters erhöhen und so dem ungeübtem Benutzer das Aufsetzen eines Filters erleichtern. Die Schlitze können auf einen Bereich beschränkt sein, der der obigen ersten Postion des Wasserfilters entspricht. Zwei, drei oder vier Schlitze vorzusehen, kann angemessen sein.

Der Tankstutzen kann in einen Wasserfiltertank der beschriebenen Art eingesetzt werden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Getränkemaschine mit einem Wassertank und einer Wasserfilterkartusche, bei der der Wassertank einen Tankstutzen (4) aufweist, wobei im Tankstutzen (4) ein Absatz (16) und ein Anschlag für die Wasserfilterkartusche vorgesehen sind und der Absatz (16) oberhalb des Anschlags angeordnet ist, und bei der die Wasserfilterkartusche (1) einen Einlass (14) und im unteren Bereich einen Auslass (15) aufweist, wobei der Auslass (15) mit dem Tankstutzen (4) verbindbar ist.

2. Getränkemaschine nach Anspruch 1, bei der im Tankstutzen ein Schlitz (5) vorgesehen ist, wobei der Schlitz (5) oberhalb des Absatzes (16) endet.

3. Getränkemaschine nach Anspruch 1 oder 2, bei der der Auslass (15) kreisförmig oder rohrförmig ausgebildet ist.

4. Getränkemaschine nach einem der Ansprüche 1 bis 3, bei der der Absatz (16) konisch ausgebildet ist.

5. Getränkemaschine nach einem der Ansprüche 1 bis 4, bei der Durchmesser (DS1) oberhalb des Absatzes (16) größer als der Durchmesser (DS2) unterhalb des Absatzes (16) ist.

6. Getränkemaschine nach einem der Ansprüche 2 bis 5, bei der der Tankstutzen (4) einen weiteren Schlitz (6; 7; 8) aufweist.

7. Getränkemaschine nach Anspruch 6, bei der der weitere Schlitz (6; 7; 8) oberhalb des Absatzes (16) endet.

8. Getränkemaschine nach einem der Ansprüche 1 bis 7, bei der der Tankstutzen (4) mit dem Boden (13) des Wassertanks verbunden, beispielsweise verschweißt oder verklebt, ist.

9. Getränkemaschine nach einem der Ansprüche 1 bis 8, bei der am Auslass (15) eine Dichtung (3) vorgesehen ist.

10. Getränkemaschine nach Anspruch 9, bei der die Dichtung (3) als Radialdichtung ausgebildet ist.

11. Getränkemaschine nach Anspruch 9 oder 10, bei der die Dichtung (3) so am Auslass (15) angeordnet ist, dass sie sich, wenn die Wasserfilterkartusche (1) im Wassertank montiert ist, unterhalb des Absatzes (16) befindet.

12. Getränkemaschine nach einem der Ansprüche 1 bis 11, bei der die Wasserfilterkartusche (1) einen ersten vertikalen Kanal aufweist, in dem das Wasser aufsteigt, und bei der die Wasserfilterkartusche (1) einen zweiten vertikalen Kanal aufweist, in dem das Wasser nach unten strömt.
